# EUROPÄISCHE PATENTANMELDUNG

(11) **EP 3 124 443 A1**
(43) Veröffentlichungstag der Anmeldung: **01.02.2017**
(21) Anmeldenummer: 15178593.8
(22) Anmeldetag: 28.07.2015
(51) Int. Cl.: C03C 1/00, C01B 33/158, C03C 3/06, C03B 19/12

(54) **KONTINUIERLICHES SOL-GEL VERFAHREN ZUR HERSTELLUNG VON QUARZGLAS**

(71) Anmelder: D. Swarovski KG, 6112 Wattens (AT)
(72) Erfinder: Czermak, Georg, 6112 Wattens (AT); Gander, Matthias, 6500 Landeck (AT); Streiter, Christina, 6112 Wattens (AT); Gabl, Christian, 6175 Kematen (AT); Lipp, Christian, 6134 Vomp (AT)

(57) **Zusammenfassung**

Vorgeschlagen wird ein kontinuierliches Sol-Gel-Verfahren zur Herstellung von Quarzglas, welches die folgenden Schritte umfasst:
(a) kontinuierliches Eindosieren eines Siliziumalkoxids in einen ersten Reaktor (R1) und wenigstens anteilige Hydrolyse durch Zugabe einer wässrigen Mineralsäure unter Erhalt eines ersten Produktstroms (A);
(b) kontinuierliche Herstellung einer wässrigen Kieselsäuredispersion durch kontinuierliches Vermischen von Wasser und Kieselsäure in einem zweiten Reaktor unter Erhalt eines zweiten Produktstroms (B);
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe einer wässrigen Base zum Produktstrom (C) unter Erhalt eines Sols;
(e) kontinuierliches Abfüllen des austretenden Sols in Formen unter Erhalt eines Aquagels;
(f) Trocknen der Aquagele unter Erhalt von Xerogelen;
(g) Sintergung der Xerogele unter Erhalt von Quarzglas.

## Beschreibung

### GEBIET DER ERFINDUNG

Die Erfindung befindet sich auf dem Gebiet der anorganischen Chemie und betrifft ein kontinuierliches Verfahren zur Herstellung von Quarzglas.

### STAND DER TECHNIK

Dreidimensionale Quarzglaskörper können nach dem so genannten Sol-Gel-Verfahren hergestellt werden. Das Prinzip dieses Verfahrens beruht auf einer sauer oder basisch katalysierten Hydrolyse und dem anschließenden Gelieren von Silanen, Siloxanen und Organosilanen durch Kondensationsreaktionen. Dabei geht das ursprünglich flüssige Sol über eine stabile flüssige Dispersion nanokristalliner Oxidpartikel in einen gelartigen und schließlich in den festen Zustand über. Das so erhaltene Aquagel wird anschließend zum Xerogel getrocknet und zu Quarzglas gesintert. Das Endprodukt ist glasartig. Unterschiedliche Porositäten und Morphologien können durch die Zugabe verschiedener Additive oder über das Trocknungsregime eingestellt werden. Im Gegensatz zur herkömmlichen Quarzglasherstellung durch Schmelzen der Rohstoffe bei sehr hohen Temperaturen findet die Formgebung beim Sol-Gel Verfahren bei Raumtemperatur statt. Die mit dieser Technik hergestellten Glaskörper müssen in der Regel nicht mehr nachbearbeitet werden, was sowohl zeiteffizienter als auch kostengünstiger ist.

Edukte einer Sol-Gel-Synthese sind niedermolekulare metallische Alkoxidverbindungen. Den ersten Schritt in dieser Synthese stellt die Hydrolyse der Alkoxide in Gegenwart einer Säure oder Base dar. Als Ergebnis dieses Vorgangs entstehen instabile Hydroxyverbindungen (a), die mitunter leicht oligomerisieren können Die entstandene Lösung ist ein Sol. Es besteht aus dispersen Polymerteilchen, die durch ihre Ladungen stabilisiert werden. Einzelne Verbindungen wachsen in einer Kondensationsreaktion durch die Bildung von Siloxanbrücken (Si-O-Si) zusammen (b). Dieser Prozess hält an, bis alle Monomere verbraucht sind. Es bildet sich noch kein zusammenhängendes Netzwerk. Alle entstandenen Teilchen liegen bei geeigneten Reaktionsbedingungen mit einer gleichmäßigen Größenverteilung von wenigen Nanometern vor. Die Reaktionsgeschwindigkeiten von Hydrolyse und Kondensation sind über Medium, pH-Wert und Konzentration beeinflussbar und laufen nebeneinander ab (c). Das Verfahren i*st ausführlich* vo**n** Nogami et al. in Journal of Noncrystalline Solids, 37, S. 191-201 (1980**)** beschrieben worden.

In geeigneter Umgebung ist ein Sol mehrere Wochen, teilweise sogar Monate haltbar. Die Gelierung geschieht durch Kondensation unter Ausbildung von Siloxanbindungen. Hier ist der namengebende Schritt der Synthese erreicht, der Sol-Gel-Übergang. Aus den losen Teilchen des Sols hat sich ein dreidimensionales Netzwerk gebildet, das mit dem Lösungsmittel durchtränkt ist. Aus dem Sol ist ein Gel geworden.

Nach der erfolgten Gelierung wird das Aquagel zum Xerogel getrocknet. Durch das vollständige Verdampfen des Lösungsmittels entsteht eine stärkere Quervernetzung des gesamten Netzwerkes. Aus diesem Schritt resultiert ein kompaktes, hochvernetztes und widerstandsfähiges Material:
(a) M(OR)n + m H2O -> M(OR)n-m(OH)m + m ROH
(b) =M-OH + HO-Me= -> =M-O-Me = + H2O
(c) =M-OR + HO-Me= -> =M-O-Me = + ROH
   M = Metall

Im letzten Schritt wird das Xerogel zum Quarzglas gesintert.

Aus dem Stand der Technik sind eine Vielzahl von Verfahren bekannt, die sich mit der Quarzglasherstellung im Allgemeinen und dem Sol-Gel-Verfahren im Besonderen beschäftigen.

Aus dem Europäischen Patent EP 0131057 B1 (SEIKO) ist ein diskontinuierliches Verfahren zur Herstellung von Quarzglas bekannt, bei dem zunächst eine hydrolysierte Lösung eines Metallalkoxides der Formel Me(OR)x bereitgestellt wird, aus der ein Sol (kolloide Lösung) gebildet wird. Das Sol wird nach dem Gelieren zu einem Xerogel getrocknet. Anschließend wird das Xerogel zum Quarzglas gesintert.

Gemäß der Lehre des Europäischen Patentes EP 0807610 B1 (LUCENT) wird zur Bildung eines Siliziumdioxid-Sols, welches weitestgehend aus nicht agglomerierten Siliziumdioxid besteht, ein Verfahren offenbart, bei dem man eine Ausgangsmischung aus Siliziumdioxidteilchen in Wasser herstellt und aus der Mischung durch scherendes Mischen das Siliziumdioxid-Sol bildet. Dem Sol wird zur Einstellung des pH Wertes von 6 bis 9 eine alkalische Substanz ohne Metallkation zugesetzt.

Das Europäische Patent EP 1251106 B1 (FITEL) beansprucht ein Verfahren, in dem ein Sol durch Mischen von Silica-Partikeln und Wasser bereit gestellt wird, wobei die Silica-Partikel eine Oberfläche von 5 bis 25 m²/g aufweisen, und mindestens 85 % sphärische Teilchen beinhalten und das Gewichtsverhältnis der Silica-Partikel zu Wasser größer als 65 % ist. Anschließend wird der pH Wert bei 10 bis 13 mittels einer Base eingestellt und dem Sol ein Gelierungsmittel zugefügt. Als Base werden Tetramethylammoniumhydroxid und Tetraethylammoniumhydroxid verwendet.

Aus der Europäischen Patentanmeldung EP 1258457 A1 (DEGUSSA) ist ein Verfahren bekannt, bei dem ein Siliconalkoxid hydrolysiert wird, zu welchem man dann Aerosil^{®} Ox50 zugibt, das aufgrund seiner speziellen Eigenschaften, seiner Partikelgröße und BET eingesetzt wird.

Gegenstand des Europäischen Patentes EP 1320515 B1 (DEGUSSA) ist ein Verfahren bei dem zwei Lösungen hergestellt werden, die zur Reaktion vereinigt werden. Lösung A ist eine wässrige saure Dispersion (pH: 1.5) einer pyrogenen Silicaverbindung (z.B. Aerosil Ox50). Lösung B ist eine wässrige basische Dispersion (pH: 10.5-13) mit ebenfalls einer pyrogenen Silicaverbindung (z.B. Aerosil Ox200). Das molare Verhältnis von H₂O zu SiO₂ und das molare Verhältnis der Si-Verbindung in Lösung A zu der Si-Verbindung in Lösung B und der resultierende pH Wert in der Mischung C (nach Vereinigung beider Lösungen) ist das ausschlaggebendes Merkmal, um dreidimensionale Körper, die größer als 2 cm sind zu erhalten.

In der Europäischen Patentanmeldung EP 1606222 A1 (DEGUSSA) wir ein Verfahren beansprucht, bei dem man entweder ein Sol aus Silikonalkoxid oder aus einem Silikonalkoxid eine entsprechende Vorstufe herstellt. Anschließend wird das Sol hydrolysiert und dann kolloidales Silica zugefügt.

Gemäß der Europäischen Patentanmeldung EP 1661866 A1 (EVONIK) wird eine wässrige Dispersion aus pyrogenem Silikondioxid (kolloidales Silikondioxid) vorgelegt, deren pH auf 2 bis 0.5 eingestellt wird, ehe dann TEOS hinzugegeben wird. Das Sol wird so erhalten und anschließend basisch eingestellt und in eine Form gefüllt, wo es zum Gel geliert.

In der Europäischen Patentanmeldung EP 1700830 A1 (DEGUSSA) wird ein Verfahren vorgeschlagen, bei dem zunächst eine wässrige Dispersion aus pyrogenem Metalloxid bereitgestellt wird, zu der ein Metalloxid hinzugegeben wird, das vorher durch die Zugabe von Wasser hydrolysiert wurde. Das so erhaltene Sol wird anschließend in eine Form gefüllt, wo es zum Gel geliert, wobei das Wasser im Aerogel durch ein organisches Lösungsmittel ersetzt wird.

Gegenstand der Europäischen Patentanmeldung EP 1770063 A1 (DYNAX) ist ein Verfahren, das sich durch die Verwendung von Silikonkomponenten auszeichnet, die sowohl hydrolysierbare als auch hydrophobe funktionelle Gruppen enthalten; bevorzugt ist Methyltrimethoxysilan. Es kommt ebenfalls eine pyrolytische Verbindung zum Einsatz, um die Mikrostruktur des Gels zu beeinflussen, welche u.a. Formamid sein kann. Als mögliche Lösungsmittel werden nichtionische (z.B. Polyoxyethylenalkylether, Polyoxypropylen-alkylether), kationische (Cetyltrimethylammoniumbromid oder -chlorid) oder anionische (Natriumdodecylsulfonate) Lösungsmittel eingesetzt.

Das Verfahren der Europäischen Patentanmeldung EP 2064159 A1 (DEGUSSA) umfasst die folgende Schritte: Zugabe von pyrogenem Silica zum sauren wässrigen Medium, und anschließend Zugabe von Siliconalkoxid zu der vorgelegten Dispersion. Das molare Verhältnis von Silica zu Silicaalkoxid soll dabei von 2.5 bis 5 liegen. Es ist ein Batch Verfahren, in dem zuerst die hochdisperse Kieselsäure vorgelegt wird und dann das Silicaalkoxid hinzugefügt wird.

In der Europäischen Patentanmeldung EP 2088128 A1 (DEGUSSA) wird ein Verfahren vorgeschlagen, bei dem pyrogenes Silica zu sauer eingestelltem Wasser zugesetzt und zu der erhaltenen Dispersion Silikontetraalkoxid gegeben wird. Der pH- Wert wird neu eingestellt und das Gemisch in einen Container gegeben, wo das Sol zum Gel geliert. Danach wird es zu einem Xerogel getrocknet und zum Glasprodukt gesintert.

Aus der Internationalen Patentanmeldung WO 2013 061104 A2 (DEBRECENI EGYETEM) ist ein kontinuierliches Verfahren zur Herstellung von Alcogelen, Aerogelen und Xerogelen bekannt, bei dem man Silane in Gegenwart von basischen Katalysatoren und einem speziellen wässrig-organischen Lösungsmittelsystem sowie einem Gelverzögerer hydrolysiert und in die Lösung inerte Partikel einbringt.

Von Nachteil bei den diskontinuierlichen Verfahren des Standes der Technik ist, dass immer nur definierte diskrete Mengen hergestellt werden können, was zu Qualitätsunterschieden führen kann. Die batchweise Herstellung begünstigt den Einschluss von Luftblasen im Glas, was ebenfalls zu einer Qualitätsminderung führen kann. Weiterhin nachteilig ist die nach jedem Durchgang erforderliche umfangreiche Reinigung aller Systeme. Zusätzlich bietet ein kontinuierliches Verfahren einfachere Möglichkeiten in Richtung up scale.

Die Aufgabe der vorliegenden Erfindung hat darin bestanden, den oben geschilderten Nachteilen abzuhelfen. Eine Möglichkeit dafür besteht darin, die Synthese mit einem kontinuierlichen Verfahren durchzuführen. Dabei lassen sich beliebige Mengen an Quarzglas hoher und stets gleichbleibender Qualität herstellen.

### BESCHREIBUNG DER EREINDUNG

Die vorliegende Erfindung betrifft ein kontinuierliches Sol-Gel-Verfahren zur Herstellung von Quarzglas, welches die folgenden Schritte umfasst:
(a) kontinuierliches Eindosieren eines Siliziumalkoxids in einen ersten Reaktor (R1) und wenigstens anteilige Hydrolyse durch Zugabe einer wässrigen Mineralsäure unter Erhalt eines ersten Produktstroms (A);
(b) kontinuierliche Herstellung einer wässrigen Kieselsäuredispersion durch kontinuierliches Vermischen von Wasser und Kieselsäure in einem zweiten Reaktor unter Erhalt eines zweiten Produktstroms (B);
(c) kontinuierliches Vermischen der Produktströme (A) und (B) in einem dritten Reaktor (R3) zur Erzeugung eines Präsols unter Erhalt eines dritten Produktstroms (C);
(d) kontinuierliche Zugabe einer wässrigen Base zum Produktstrom (C) unter Erhalt eines Sols;
(e) kontinuierliches Abfüllen des austretenden Sols in Formen unter Erhalt eines Aquagels;
(f) Trocknen der Aquagele unter Erhalt von Xerogelen;
(g) Sintergung der Xerogele unter Erhalt von Quarzglas.

Es wurde gefunden, dass das neue kontinuierliche Verfahren die eingangs beschriebenen vielfältigen Probleme alle gleichzeitig und voll umfänglich löst. Abgesehen davon, dass das Verfahren die Herstellung beliebiger und daher auch stets unterschiedlicher Produktmengen erlaubt, führt die Synthese zu Produkten gleichbleibend hoher Qualität. Die Qualität der Produkte wird weiter verbessert, durch Entgasung der Edukte, des Präsols, der Dispersion oder des Sols selbst. Die Entgasung wird erfindungsgemäß vorzugsweise mit Ultraschall vorgenommen. Zusätzlich können die Edukte gegebenenfalls durch Verwendung von Ansaugfiltern partikelfrei eingesetzt und jede Form mit frisch hergestelltem Sol befüllt werden. Durch die Vermeidung von nicht spezifikationsgerechter Ausschussware wird somit vor allem die Rentabilität des Verfahrens signifikant gesteigert, zumal lange Reinigungszeiten entfallen, insbesondere da die bevorzugt einzusetzenden Reaktoren leicht mit Spülmedien gereinigt werden können.

**SILIZIUMALKOXIDE UND HYDROLYSE (Verfahrensschritt A)**

Siliziumalkoxide, die im Sinne der Erfindung als Ausgangsstoffe für die Herstellung der Quarzgläser in Betracht kommen, folgen vorzugsweise der Formel (I)

Si(OR)₄ (I)

in der R für einen Alkylrest mit 1 bis 6 Kohlenstoffatomen steht. Typische Beispiele sind Tetrapropylorthosilikat und Tetrabutylorthosilikat, bevorzugt werden jedoch Tetramethylorthosilikat (TMOS) und insbesondere Tetraethylorthosilikat (TEOS) eingesetzt. Da TEOS in Wasser unlöslich ist, kann man alkoholische, speziell ethanolische Lösungen einsetzen, wobei dem Alkohol die Funktion des Phasenvermittlers zukommt. Die Siliziumalkoxide können auch weitere Siliziumverbindungen als Additive mitumfassen, wie beispielsweise Methyltriethylsilan, Dimethyldiethylsilan, Trimethylethylsilan und dergleichen.

Der Lösung können an dieser Stelle auch weitere ionische Verbindungen zugegeben werden, beispielsweise die Elemente Na, Al, B, Cd, Co, Cu, Cr, Mn, Au, Ni, V, Ru, Fe, Y, Cs, Ba, Cd, Zn, Eu, La, K, Sr, TB, Nd, Ce, Sm, Pr, Er, Tm, Mo, nämlich dann, wenn gefärbte Quarzgläser gewünscht sind. Die Zugabe dieser Verbindungen kann jedoch ebenfalls zusammen mit der Kieselsäure oder aber im Zuge weiterer Schritte erfolgen.

Die saure Hydrolyse der Siliziumalkoxide erfolgt im Reaktor R1 in Gegenwart wässriger Mineralsäuren, wie Schwefelsäure, Salpetersäure, Essigsäure oder Salzsäure. Salzsäure mit einer Konzentration von 0,01 mol/l hat sich als besonders günstig erwiesen. Das bevorzugte Volumenverhältnis von Alkoxid : Mineralsäure ist 10: 1 bis 1 :10, besonders bevorzugt 3:1 bis 1:3 und ganz besonders bevorzugt 2.5:1 bis 1:2.5.

Die Hydrolyse wird bei geeigneter Temperatur durchgeführt, indem die beiden Edukte mittels Pumpen gefördert, zusammengeführt und in einem temperierten Durchflussreaktor zur Reaktion gebracht werden. Bei Nichtmischbarkeit der Edukte bildet sich im Durchflussreaktor ein Slug Flow aus. Der Temperaturbereich der Hydrolyse reicht von 1 bis etwa 100°C, wobei die bevorzugte Temperatur bei etwa 70°C bis etwa 90°C liegt.

**KIESELSÄUREN UND HERSTELLUNG DER DISPERSION (Verfahrensschritt B)**

Im zweiten Schritt des Verfahrens wird in einem temperierbaren Reaktor R2 ebenfalls kontinuierlich eine wässrige Dispersion einer hochdispersen Kieselsäure hergestellt. Vorzugsweise weisen die Kieselsäuren BET-Oberflächen im Bereich von etwa 30 bis etwa 100 m²/g und insbesondere etwa 40 bis etwa 60 m²/g auf. Besonders bevorzugt ist der Einsatz des Produktes Aerosil^{®} OX50 (EVONIK), bei dem es sich um eine pyrogene, hydrophile Kieselsäure mit einer Oberfläche von etwa 50 m²/g handelt, welche zu mehr als 99.8 Gew.-% aus SiO₂ besteht In einem temperierbaren Reaktor wird Wasser und OX50 zudosiert, und mittels Dispergiergerät homogenisiert. Die Entgasung der Dispersion kann mit Hilfe von Ultraschallbehandlung erfolgen. Der Massenanteil an OX50 in der Dispersion beträgt etwa 1-60 Gew%, insbesondere 33 Gew%. Die Dosierung von OX50 und Wasser kann beispielsweise gravimetrisch erfolgen.

**SOLBILDUNG (Verfahrensschritt c)**

Während im ersten Verfahrensschritt ein erster kontinuierlicher Strom einer hydrolysierten Siliziumalkoxidverbindung hergestellt wurde und im zweiten Schritt ebenfalls kontinuierlich ein zweiter Strom einer wässrigen Kieselsäuredispersion erzeugt wurde, erfolgt nun im dritten Schritt die Vermischung der beiden Ströme und die Bildung des Präsols. Dazu werden die Produktströme (A) und (B) vor dem Reaktor R3 mittels geeignetem Mischsystem zusammengeführt. Die Volumenverhältnisse der beiden Ströme (A) und (B) können variabel eingestellt werden. Dadurch können die Produkteigenschaften des fertigen Quarzglases beeinflusst werden. Bevorzugtes Volumenmischungsverhältnis ist etwa 10:1 bis etwa 1:10, insbesondere bevorzugt etwa 5:1 bis etwa 1:5 und ganz besonders bevorzugt etwa 2,5:1 bis etwa 1:2,5. Das Präsol kann hier je nach Qualitätsanspruch des Quarzglases durch geeignete Entgasungsmethoden, beispielsweise Ultraschall, entgast werden. Die Zusammenführung der Produktströme (A) und B(B) erfolgt bei Temperaturen von 1 bis etwa 100 °C, vorzugsweise etwa 10 bis etwa 50 °C und besonders bevorzugt bei Umgebungstemperatur.

Die nachfolgende Gelierung des Sols wird durch Erhöhung des pH- Wertes ausgelöst. Hierfür wird dem kontinuierlich hergestellten Präsol eine Base kontinuierlich zugeführt. Während das Hydrolyseprodukt einen pH-Wert von etwa 1 bis 2 aufweist, wird dieser durch Zugabe der Kieselsäuredispersion auf etwa 2 bis 3 angehoben. Es hat sich jedoch erwiesen, dass die Rissfestigkeit des Gels während des Schrumpfens weiter verbessert werden kann, wenn man den pH-Wert weiter anhebt, beispielsweise auf Werte im Bereich von 3 bis 9, vorzugsweise 4-6. Bei der Base kann es sich beispielsweise um Ammoniak (wässrige Lösung oder gasförmig), eine organische Aminverbindung oder auch Pyridin handeln. Alkali- oder Erdalkalibasen sind weniger bevorzugt, weil sie weitere Kationen in das Produkt einbringen, die zur Herstellung von hochreinen Quarzgläsern unerwünscht sein können.

### REAKTOREN

Auch wenn die Wahl der Reaktoren an sich unkritisch ist, hat sich doch eine Ausführungsform der Erfindung als besonders vorteilhaft erwiesen: besonders bevorzugt ist, wenn wenigstens einer der Schritte (a), (b) oder (c) in einem Durchflussreaktor, gegebenenfalls mit vorgeschaltetem Mischelement durchgeführt wird.

In der einfachsten Ausführungsform handelt es sich bei den Reaktoren um Schläuche aus einem beständigen Material, wie beispielsweise Teflon, Polyamid, Metall, Polyethylen oder Polypropylen, die eine Länge von etwa 50 bis etwa 1000 m, vorzugsweise etwa 100 bis etwa 800 m und besonders bevorzugt 100-500 m sowie im Mittel einen Querschnitt von etwa 1 bis etwa 10 mm, vorzugsweise etwa 1 bis etwa 5 mm aufweisen können. Diese Schläuche können spiralig aufgewunden werden, was den Platzbedarf erheblich reduziert. Die langen Wegstrecken entsprechen bei gegebener Durchflussmenge der jeweils optimalen Reaktionszeit. Solche Anordnungen sind ausgesprochen flexibel, da sich die Schlauchlängen beliebig verlängern oder kürzen lassen und mit geringem Aufwand zu reinigen sind. Eine solche Reaktionsführung kann wesentlich zur Rentabilität des Verfahrens beitragen.

### GELBILDUNG

Das Präsol wird kontinuierlich aus dem Reaktor R3 gefördert, mit Ammoniak versetzt und in Formen abgefüllt, in denen die Gelbildung stattfinden kann. Da die auf diese Weise erhaltenen Aquagele während der Alterung in der Form schrumpfen, müssen sie im Behälter leicht gleiten können. Aus diesem Grunde eignen sich hier insbesondere Behälter aus einem hydrophoben Material, wie Polyethylen, Polypropylen, Teflon, PVC oder Polystyrol.

Die Aquagele müssen zwecks Aufbereitung entformt und zu Xerogelen getrocknet werden. Die Entformung kann unter bestimmten Bedingungen, beispielsweise unter Wasser, erfolgen. Bei größeren Aquagelen kann das Ethanol durch Verweilen im Wasser teilweise durch Wasser ersetzt werden. Dies ermöglicht ein rissfreies Trocknen von größeren Aquagelen (z.B.: 8x8x8 cm). Zusätzlich kann man sich das Wasserbad auch zu Nutze machen, um diverse Elemente ins Aquagel hineindiffundieren zu lassen. Hiermit sind beispielsweise gefärbte Quarzgläser zugänglich. Die Trocknungsbedingungen werden von der Verdampfungsgeschwindigkeit des Lösungsmittels im Gel, also Wasser und Alkohol, beeinflusst. Eine Verringerung der Verdampfungsgeschwindigkeit unter Einhaltung einer geringen Verdampfungsrate trägt dazu bei, das Gel vor Rissbildungen zu bewahren. Lange Trocknungszeiten machen das Verfahren umgekehrt teurer, so dass hier ein Kompromiss gefunden werden muss.

### SINTERUNG

Die Sinterung kann in an sich bekannter Weise durchgeführt werden. Während der Sinterung werden die restlichen noch in den Xerogelen enthaltenen Lösungsmittel entfernt und die Poren im System geschlossen. Die Sintertemperatur beträgt bis zu 1400°C und kann bei den meisten Produkten unter Normalatmosphäre durchgeführt werden. Erfindungsgemäß bevorzugt wird die Sinterung in folgender Weise durchgeführt:
1) Entfernung der Lösungsmittel;
2) Entfernung von ggf. enthaltenen unerwünschten organischen Verbindungen;
3) Schließung der ggf. vorhandenen Poren unter Bildung von Quarzglas.

Für die Entfernung der Lösungsmittel in Teilschritt 1 werden Temperaturen von etwa 20°C bis etwa 200°C verwendet, vorzugsweise etwa 70 bis etwa 150 °C und besonders bevorzugt etwa 90 bis etwa 110°C. Die Entfernung unerwünschter organischer Verbindungen in Schritt 2, die durch Zersetzung von kohlenstoffhaltigen Edukten/Produkten entstehen, wird bei Temperaturen im Bereich von etwa 800 bis etwa 1.100 °C, vorzugsweise etwa 850 bis etwa 1050 °C und besonders bevorzugt etwa 900 bis etwa 1.000 °C durchgeführt. In Schritt 3 erfolgt die Schließung der Poren bei Temperaturen zwischen etwa 1.100 bis etwa 1.400 °C, vorzugsweise etwa 1.150 bis etwa 1.350 °C und besonders bevorzugt etwa 1.200 bis etwa 1.300 °C.

### BEISPIELE

**BEISPIEL 1**

Über eine erste Pumpe wurde TEOS und über eine zweite Pumpe wässerige HCl (0,010 mol/l) zur Verfügung gestellt. Die beiden Lösungen wurden über Schläuche geführt und mit Hilfe eines T-Stücks zusammengeführt. Die Mischung wies folgende Zusammensetzung auf:
TEOS 66,66 V%
HCl 33,33V%

Die Mischung trat bei 75 °C in einen ersten PA-Schlauch (Reaktor R1) ein, der eine Länge von 300 m und einen Innendurchmesser von 2,7 mm aufwies; die Verweilzeit im Schlauch betrug etwa 30 Minuten. Der pH-Wert lag bei 1,5.

Im zweiten Reaktor wurde die OX50 Dispersion hergestellt, indem zu 1000 g Wasser 500 g OX50 eingebracht wurden. Zwecks Homogenisierung der Dispersion kam ein Ultra Turrax zur Anwendung. Die so erhaltene Dispersion mit wOX50 von 33,33% wurde dann mittels Pumpe im nächsten Schritt weiter umgesetzt. Beide Ströme wurden über ein weiteres T-Stück zusammengeführt und mittels statischem Mischrohr kontinuierlich vermischt, wobei der pH-Wert etwa 2,5 betrug. Das Präsol wurde anschließend mit Ultraschall entgast. Dem Präsol wurde dann kontinuierlich wässriger Ammoniak zudosiert und der pH-Wert auf 4-5 eingestellt und sofort in Formen aus PE (2x2x2 cm) abgefüllt und diese dicht verschlossen. Nach etwa 10 Sekunden setzte die Gelierung ein. Nach einer Verweilzeit von 20 Stunden in den verschlossenen Formen wurden die Aquagele unter Wasser entformt, und nach zwei Stunden im Wasserbad an Luft zu Xerogelen getrocknet Die Xerogele wurden anschließend mittels folgender Temperaturrampe zum Quarzglas gesintert: RT-100°C (4 h), 100°C (3h) 100°C-950°C (4h), 950°C (2h), 950°C-1250°C (6h), 1250°C (1h).

## Patentansprüche

1. Kontinuierliches Sol-Gel-Verfahren zur Herstellung von Quarzglas, umfassend die folgenden Schritte:
(a) kontinuierliches Eindosieren eines Siliziumalkoxids in einen ersten Reaktor (R1) und wenigstens anteilige Hydrolyse durch Zugabe einer wässrigen Mineralsäure unter Erhalt eines ersten Produktstroms (A);
(b) kontinuierliche Herstellung einer wässrigen Kieselsäuredispersion durch kontinuierliches Vermischen von Wasser und Kieselsäure in einem zweiten Reaktor unter Erhalt eines zweiten Produktstroms (B);
(c) kontinuierliches Vermischen der Produktströme (A) und (B) aus den Schritten (a) und (b) in einem dritten Reaktor (R3) zur Erzeugung eines Präsols unter Erhalt eines dritten Produktstroms (C);
(d) kontinuierliche Zugabe einer wässrigen Base zum Produktstrom (C) aus Schritt (c) unter Erhalt eines Sols;
(e) kontinuierliches Abfüllen des austretenden Sols aus Schritt (d) in Formen unter Erhalt eines Aquagels;
(f) Trocknen der Aquagele aus Schritt (e) unter Erhalt von Xerogelen;
(g) Sintergung der Xerogele aus Schritt (f) unter Erhalt von Quarzglas.

2. Verfahren nach Anspruch 1, **dadurch gekennzeichnet, dass** man im Schritt (a) Siliziumalkoxide einsetzt, die der Formel (I) folgen
Si(OR)₄ (I)
in der R für einen Alkylrest mit 1 bis 6 Kohlenstoffatomen steht.

3. Verfahren nach den Ansprüchen 1 und/oder 2, **dadurch gekennzeichnet, dass** man im Schritt (a) als Siliziumalkoxid Tetraethylorthosilikat (TEOS) einsetzt.

4. Verfahren nach mindestens einem der Ansprüche 1 bis 3, **dadurch gekennzeichnet, dass** man im Schritt (a) als Mineralsäure Salzsäure einsetzt.

5. Verfahren nach mindestens einem der Ansprüche 1 bis 4, **dadurch gekennzeichnet, dass** man im Schritt (a) bezogen auf die Siliziumalkoxide etwa 1 bis etwa 60 Gew.-% Mineralsäure einsetzt.

6. Verfahren nach mindestens einem der Ansprüche 1 bis 5, **dadurch gekennzeichnet, dass** man im Schritt (a) die Hydrolyse der Siliziumalkoxide bei einer Temperatur im Bereich von etwa 1 bis etwa 100 °C durchführt.

7. Verfahren nach mindestens einem der Ansprüche 1 bis 6, **dadurch gekennzeichnet, dass** man im Schritt (b) hochdispersive Kieselsäuren einsetzt, die BET-Oberflächen im Bereich von etwa 30 bis etwa 100 m²/g aufweisen.

8. Verfahren nach mindestens einem der Ansprüche 1 bis 7, **dadurch gekennzeichnet, dass** man im Schritt (b) eine wässrige Dispersion herstellt, die etwa 1 bis etwa 60 Gew.-% Kieselsäure enthält.

9. Verfahren nach mindestens einem der Ansprüche 1 bis 8, **dadurch gekennzeichnet, dass** man die Produktströme (A) und (B) im Volumenverhältnis Alkoxid zu Kieselsäure von etwa 10 : 1 bis etwa 1:10 vermischt.

10. Verfahren nach mindestens einem der Ansprüche 1 bis 9, **dadurch gekennzeichnet, dass** man die Produktströme (A) und (B) bei Temperaturen im Bereich von etwa 0 bis etwa 80 °C vermischt.

11. Verfahren nach mindestens einem der Ansprüche 1 bis 10, **dadurch gekennzeichnet, dass** man in den Reaktor (R3) zum Präsol kontinuierlich eine Base zudosiert.

12. Verfahren nach mindestens einem der Ansprüche 1 bis 11, **dadurch gekennzeichnet, dass** man wenigstens einen der Schritte (a), (b) oder (c) in einem Durchflussreaktor, gegebenenfalls mit vorgeschaltetem Mischelement durchführt.

13. Verfahren nach Anspruch 12, **dadurch gekennzeichnet, dass** man Durchflussreaktoren einsetzt, die eine Länge von etwa 50 bis etwa 1000 m und einen Querschnitt von etwa 1 bis 10 mm aufweisen.

14. Verfahren nach mindestens einem der Ansprüche 1 bis 13, **dadurch gekennzeichnet, dass** man die Gelbildung bei Temperaturen im Bereich von 0 bis 100 °C durchführt.

15. Verfahren nach mindestens einem der Ansprüche 1 bis 14, **dadurch gekennzeichnet, dass** man die Trocknung bei Temperaturen im Bereich von 0 bis 150 °C durchführt.
